# FASCICULE DE BREVET EUROPEEN

(11) **EP 4 241 871 B1**
(45) Date de publication et mention de la délivrance du brevet: **20.11.2024**
(21) Numéro de dépôt: 23159884.8
(22) Date de dépôt: 03.03.2023
(51) Int. Cl.: B01D 47/14, B01J 19/32, B01D 3/32

(54) **TRONÇON DE GARNISSAGE D'UNE COLONNE DE SÉPARATION GAZ/LIQUIDE**
FÜLLKÖRPERABSCHNITT EINER GAS-FLÜSSIGKEITS-TRENNSÄULE
PACKING SECTION OF A GAS/LIQUID SEPARATION COLUMN

(30) Priorité: 07.03.2022 FR 2201949; 24.10.2022 FR 2211002
(43) Date de publication de la demande: 13.09.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BAITOKARA, Victor, 94400 VITRY SUR SEINE (FR); FAUCHER, Vincent, 94503 CHAMPIGNY SUR MARNE (FR); AMANT, Ludovic, 94400 VITRY SUR SEINE (FR); DANEL, Philippe, 94781 Vitry Sur Seine (FR); LEBAIN, Gilles, 94407 Vitry sur Seine (FR); BABINET, Cyrille, 94407 Vitry sur Seine (FR)
(74) Mandataire: Air Liquide

(56) Documents cités:
- EP-A1- 0 601 257
- EP-A1- 1 593 427
- EP-A1- 3 718 617
- CN-A- 108 479 685
- FR-A1- 2 676 371
- JP-A- H1 199 329
- US-B2- 8 807 541

## Description

La présente invention se rapporte au domaine des colonnes de séparation gaz/liquide et à leur assemblage et elle concerne plus particulièrement un procédé d'installation d'un tronçon de garnissage dans une virole afin de former ces colonnes de séparation gaz/liquide.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation gaz/liquide comprend notamment une étape d'insertion d'une pluralité de tronçons de garnissage au sein d'une virole. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plaques de traitement formées respectivement par plusieurs bandes ondulées, sont souvent appelés "packs". Les tronçons de garnissage sont classiquement empilés les uns sur les autres le long de la direction longitudinale d'allongement de la colonne, le cas échéant avec des séparateurs interposés, afin de participer à la séparation des composants du fluide sur la dimension axiale de la colonne. Il convient que les tronçons de garnissage soient correctement centrés dans la virole, avec un jeu constant et conforme à ce qui a été prévu à la conception de la colonne, afin que l'efficacité de la séparation gaz/liquide soit optimale.

Il est connu de procéder à l'insertion des tronçons de garnissage au sein d'une virole maintenue verticale, la force de gravité facilitant grandement la progression du tronçon de garnissage inséré au sein de la virole. Un tel procédé peut toutefois s'avérer contraignant lorsque les colonnes de séparation gaz/liquide à assembler présentent un diamètre important et une dimension axiale nécessitant la mise en oeuvre de viroles de grande longueur, de l'ordre de plusieurs dizaines de mètres. En effet, de tels procédés avec une insertion verticale des tronçons de garnissage nécessitent alors un outillage apte à soulever les tronçons de garnissage sur une grande distance afin de les mettre en regard de l'extrémité de la virole ainsi qu'un site de production présentant une hauteur de plafond supérieure à la longueur de la virole.

Il est donc souhaité, pour les viroles de longueur élevée, de prévoir d'assembler des tronçons de garnissage dans une virole qui est agencée à l'horizontale. Une telle position rend difficile l'insertion des tronçons de garnissage du fait que ladite insertion nécessite une force de poussée considérable sur l'ensemble de la longueur de la virole, la gravité n'intervenant plus comme force d'accompagnement du mouvement du tronçon de garnissage au sein de la virole.

Cette force de gravité peut même entraîner une légère déformation de la virole et rendre compliqué le centrage du tronçon de garnissage par rapport à une ouverture d'entrée de la virole en regard de laquelle le tronçon de garnissage doit être positionné avant d'être poussé à l'intérieur de cette virole. US8807541-B2, FR2676371-A1, EP0601257-A1 divulguent un tronçon de garnissage destiné à être installé dans une virole pour former une colonne de séparation gaz/liquide constitué de blocs comportant un élément de maintien du bloc de traitement s'étendant au moins partiellement autour de la face externe du bloc de traitement, l'élément de maintien comportant une portion de maintien en position des plaques de traitement du bloc de traitement et une portion disposée à une extrémité longitudinale de l'élément de maintien et en contact avec la première face discoïde, caractérisé en ce qu'une pièce de renvoi de fluide s'étend sur la périphérie du tronçon de garnissage, comprenant une portion de guidage du fluide formant un plan incliné s'éloignant de la face externe du bloc de traitement au fur et à mesure de l'éloignement du tronçon.

La présente invention s'inscrit dans ce contexte et vise à proposer une solution qui permette de faciliter l'insertion d'un tronçon de garnissage dans la virole d'une colonne de séparation gaz/liquide, que la virole et la direction de poussée du tronçon de garnissage dans la virole soient verticales ou horizontales, et qui permette par ailleurs d'assurer une bonne position du tronçon de garnissage au sein de la virole pour garantir l'efficacité de la séparation gaz/liquide au sein de la virole. En rendant la pièce de renvoi de fluide étant distincte de l'élément de maintien, il devient possible de choisir des matériaux de rigidité différente pour ces deux éléments. Ainsi la pièce de renvoi peut être particulièrement souple, permettant une insertion plus facile dans la virole alors que l'élément de maintien a la rigidité nécessaire pour son rôle structurel.

La présente invention a pour principal objet un tronçon de garnissage destiné à être installé dans une virole pour former une colonne de séparation gaz/liquide, le tronçon de garnissage comprend un bloc de traitement d'un fluide prenant globalement une forme cylindrique s'étendant le long d'une direction longitudinale, le bloc de traitement étant formé par un empilement de plaques de traitement du fluide le long de la direction longitudinale, le bloc de traitement présentant une première face discoïde et une deuxième face discoïde s'étendant chacune dans des plans parallèles l'un par rapport à l'autre, le bloc de traitement présentant une face externe s'étendant sur le pourtour dudit bloc de traitement entre la première face discoïde et la deuxième face discoïde, le tronçon de garnissage comportant au moins un élément de maintien du bloc de traitement s'étendant au moins partiellement autour de la face externe du bloc de traitement, l'élément de maintien comportant une portion de maintien en position des plaques de traitement du bloc de traitement et une portion disposée à une extrémité longitudinale de l'élément de maintien et en contact avec la première face discoïde, caractérisé en ce qu'une pièce de renvoi de fluide s'étend sur la périphérie du tronçon de garnissage, la pièce de renvoi de fluide comportant une portion de liaison, sensiblement cylindrique et configurée pour être liée au bloc de traitement et à l'élément de maintien, et une portion de guidage du fluide prolongeant la portion de liaison en formant un plan incliné s'éloignant de la face externe du bloc de traitement au fur et à mesure de l'éloignement de la portion de liaison, la pièce de renvoi de fluide étant distincte de l'élément de maintien, la portion de liaison étant interposée entre l'élément de maintien et le bloc de traitement.

Selon d'autres aspects facultatifs :
- la pièce de renvoi de fluide est moins rigide que l'élément de maintien.
- la portion de liaison de la pièce de renvoi de fluide a une épaisseur qui est au plus la moitié, voire au plus le tiers de l'épaisseur de la portion de maintien de l'élément de maintien.
- la pièce de renvoi de fluide est disposée de telle sorte que la portion de liaison est disposée entre le bloc et la paroi de chevauchement.
- la portion de guidage est mobile entre une position de repos et une position de travail, la portion de guidage étant libre durant la position de repos tandis que la portion de guidage est au moins partiellement plaquée contre une face interne de la virole dans la position de travail.
- l'élément de maintien est formé en aluminium et la pièce de renvoi de fluide est formée en aluminium.
- la paroi de butée comporte au moins une entaille annulaire disposée sur une surface externe de la paroi de butée.
- la portion de maintien comporte une paroi annulaire entourant le bloc de traitement et au moins une griffe annulaire faisant saillie de la paroi annulaire vers le bloc de traitement pour être en prise dans ledit bloc de traitement.
- l'élément de maintien comprend plusieurs griffes annulaires faisant saillie de la paroi annulaire en se répartissant le long de la direction longitudinale.
- la paroi de chevauchement forme un logement pour une protubérance de la portion de liaison de la pièce de renvoi de fluide.

La présente invention a également pour objet une colonne de traitement gaz/liquide comportant une virole et au moins un tronçon de garnissage tel que précédemment évoqué.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation schématique d'une virole dans laquelle est logé au moins un tronçon de garnissage selon un aspect de l'invention, un tronçon de garnissage étant ici rendu visible par une découpe partielle fictive de la virole, la figure 1 rendant par ailleurs visible un dispositif d'installation par poussée d'un tronçon de garnissage au sein de la virole ;
[Fig. 2] est une représentation en perspective du tronçon de garnissage illustré sur la figure 1 ;
[Fig. 3] est une représentation partielle d'une coupe du tronçon de garnissage illustré sur la figure 2, vue en perspective ;
[Fig. 4] est une représentation partielle d'une coupe du tronçon de garnissage illustré sur la figure 2, vue de face.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

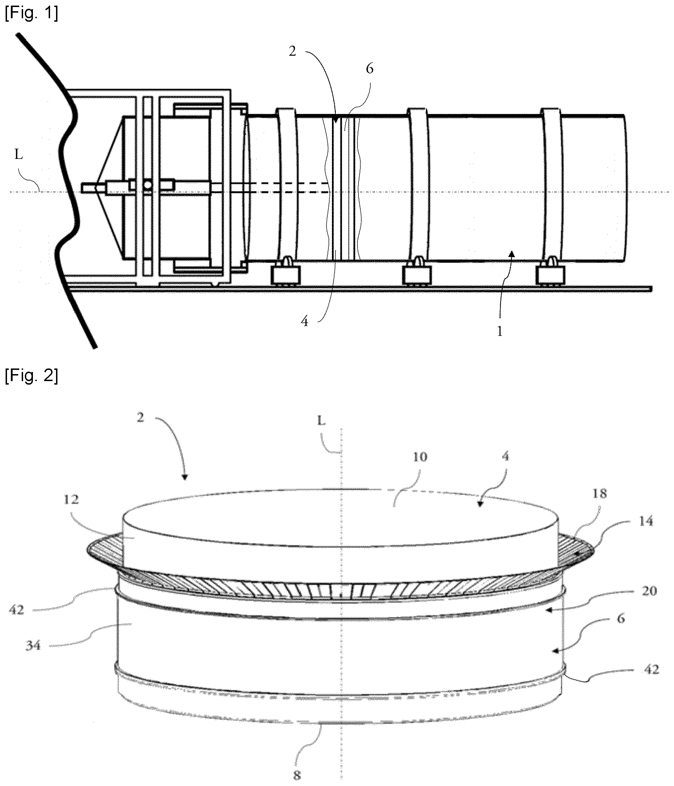

Sur la figure 1 est illustrée une virole 1, dans laquelle est installé au moins un tronçon de garnissage 2 conforme à un aspect de l'invention, et un dispositif d'installation 100 des tronçons de garnissage au sein de la virole qui est configuré pour dans un premier temps disposer un tronçon de garnissage en regard d'une ouverture de la virole et pour dans un deuxième temps pousser le tronçon de garnissage au sein de la virole. Une colonne de séparation gaz/liquide d'un fluide est formée une fois la virole 1 équipée d'une pluralité de tronçons de garnissage 2, empilés les uns sur les autres le long d'une direction longitudinale d'allongement principale de la virole, avec le cas échéant des séparateurs intercalés ici non visibles.

La virole 1 s'étend principalement le long d'une direction longitudinale L en présentant ainsi deux extrémités longitudinales. Dans l'exemple illustré, la virole 1 est positionnée horizontalement lors de l'insertion du ou des tronçons de garnissage, c'est-à-dire que la direction longitudinale L s'étend sensiblement parallèlement au sol sur lequel est installée la virole 1, étant entendu qu'elle est par la suite installée verticalement pour être utilisée comme colonne de séparation gaz/liquide du fluide. On entend par « verticalement » que la direction longitudinale L s'étend sensiblement perpendiculairement par rapport au sol sur lequel est installé la virole 1.

Le dispositif d'installation 100 permet ici d'insérer le tronçon de garnissage 2 au sein d'une virole 1 positionnée à l'horizontale, et il convient de noter que le tronçon de garnissage tel qu'il va être décrit selon l'invention permet avantageusement de faciliter son insertion au sein de la virole 1 dans cette configuration d'assemblage à l'horizontale. Toutefois, les caractéristiques avantageuses du tronçon de garnissage qui vont être maintenant décrites sont tout aussi avantageuses dans le cas d'une insertion dans une virole positionnée à la verticale.

Tel qu'illustré sur les figures 2 à 4, le tronçon de garnissage 2 comprend un bloc de traitement 4 d'un fluide prenant globalement une forme cylindrique et un élément de maintien 6 du bloc de traitement disposé autour dudit bloc de traitement 4.

Le bloc de traitement 4 s'étend le long de la direction longitudinale L, c'est-à-dire que l'axe de révolution du bloc de traitement 4 est parallèle à la direction longitudinale L. Le bloc de traitement 4 présente une première face discoïde 8 et une deuxième face discoïde 10 s'étendant chacune dans des plans parallèles l'un par rapport à l'autre, et une face externe 12 formant le pourtour dudit bloc de traitement 4 entre la première face discoïde 8 et une deuxième face discoïde 10. De manière arbitraire, on définit la première face discoïde du tronçon de garnissage comme étant celle qui est insérée en première dans la virole lors de l'insertion du tronçon de garnissage correspondant.

Le bloc de traitement 4 comporte des plaques de traitement du fluide ajourées et empilées le long de la direction longitudinale L. Les plaques de traitement sont ainsi superposées les unes sur les autres afin de former le bloc de traitement 4, en centrant les plaques de traitement sur l'axe de révolution du bloc de traitement 4. Les bords des plaques s'alignant les uns à la suite des autres le long de la direction longitudinale L, chacun des bords de plaque participe à former la face externe 12 du bloc de traitement 4. Les plaques de traitement peuvent notamment consister en des grilles formées par un tissage de bandes, le cas échéant ondulées, entre lesquelles circule le fluide à traiter.

Comme mentionné ci-dessus, l'élément de maintien 6 du bloc de traitement 4 s'étend autour du bloc de traitement 4, de sorte notamment à pouvoir maintenir en position les plaques de traitement les unes par rapport aux autres, aussi bien une fois que le bloc de traitement 4 est installé dans la virole que lors de l'insertion de ce bloc de traitement. Pour cela, l'élément de maintien 6 s'étend au moins partiellement autour de la face externe 12 du bloc de traitement 4, en étant en contact localement avec la face externe 12 du bloc de traitement 4.

Le tronçon de garnissage 2 comprend par ailleurs une pièce de renvoi de fluide 14 distincte de l'élément de maintien 6 et s'étendant également sur la périphérie du tronçon de garnissage 2. De cette manière, il est possible de choisir un matériau métallique plus rigide pour fabriquer l'élément de maintien et un matériau métallique moins rigide pour fabriquer la pièce de renvoi 14.

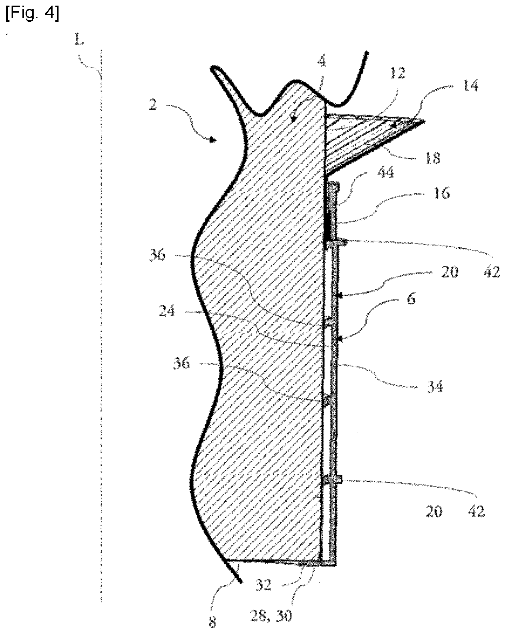

Une zone de recouvrement de la pièce de renvoi de fluide par l'élément de maintien est formée sur une portion du bloc de traitement, de sorte que la pièce de renvoi de fluide est interposée en partie entre l'élément de maintien 6 et le bloc de traitement 4. Plus particulièrement, et tel que cela sera décrit plus en détails ci-après, l'élément de maintien comporte une paroi de chevauchement 44, visible sur la figure 4, configurée pour former un logement de réception d'une protubérance formée sur une portion de liaison 16 de la pièce de renvoi de fluide.

La pièce de renvoi de fluide 14 comporte donc une portion de liaison 16, destinée à être liée au bloc de traitement 4 et à l'élément de maintien 6, et une portion de guidage 18 du fluide prolongeant la portion de liaison 16 en direction de la deuxième face discoïde 10 du bloc de traitement 4, en référence à l'orientation préalablement définie selon laquelle la première face discoïde 8 est la face qui pénètre en premier dans la virole lors de l'insertion du tronçon de garnissage.

La portion de liaison 16 est une portion de la pièce de renvoi de fluide sensiblement cylindrique, dont la forme et la dimension radiale sont configurées pour que la portion de liaison soit sensiblement plaquée contre la face externe 12 du bloc de traitement 4. La portion de guidage 18 est par contre une portion tronconique, qui s'ouvre depuis l'extrémité de la portion de liaison 16 qu'elle prolonge.

On comprend par « la portion de guidage 18 s'ouvre » que la dimension radiale, ou diamètre, de la portion de guidage 18 tend à s'agrandir au fur et à mesure de l'éloignement de la portion de liaison et donc du rapprochement de la deuxième face discoïde 10.

La pièce de renvoi de fluide, à la différence de l'élément de maintien 6, est réalisée dans un matériau élastique, autorisant une souplesse de la portion de guidage et une déformation possible, notamment lors de l'insertion du tronçon de garnissage dans la virole. Plus particulièrement, la portion de guidage 18 peut prendre une position de repos et une position de travail, la portion de guidage 18 étant libre durant la position de repos tandis que la portion de guidage 18 est au moins partiellement plaquée contre une face interne de la virole 1 dans la position de travail. On comprend que lors du montage du tronçon de garnissage 2 dans la virole 1, la portion de guidage 18 passe de la position de repos, avant son insertion dans la virole, à la position de travail lors de l'insertion dans la virole de sorte qu'au moins l'extrémité libre de la portion de guidage 18 est au contact de la face interne de la virole 1.

Tel qu'évoqué, la pièce de renvoi de fluide 14 est réalisée distinctement de l'élément de maintien 6 et présente une partie disposée entre le bloc de traitement 4 et l'élément de maintien 6. Le positionnement de l'élément de maintien 6 contre le bloc de traitement 4 participe ainsi à figer la position de la pièce de renvoi de fluide par rapport à ce bloc de traitement, notamment en recouvrant tout ou partie de la portion de liaison. Afin d'assurer la position de la pièce de renvoi de fluide, des moyens de fixation peuvent être prévus, par exemple des rivets, entre la portion de liaison 16 de la pièce de renvoi de fluide 14 et l'élément de maintien 6.

La portion de liaison et de préférence toute la pièce de renvoi a une épaisseur d'entre 0,2 et 0,6mm alors que l'élément de maintien a une épaisseur d'entre 2 et 4mm. Par ce moyen ou par d'autres moyens, par exemple le matériau utilisé, la pièce de renvoi de fluide 14 est moins rigide que l'élément de maintien 6.

Selon l'invention, et tel que particulièrement visible sur les figures 2 à 4, l'élément de maintien 6 comporte une portion de maintien 20 en position des plaques de traitement du bloc de traitement 4, de forme cylindrique à section circulaire pour être disposée en regard de la face externe 12 du bloc de traitement, et une portion annulaire 28 ne comprenant pas de fentes.

La portion annulaire forme une paroi de butée 28 s'étendant de façon annulaire en saillie de la portion de maintien 20 vers l'intérieur de la face discoïde 8.

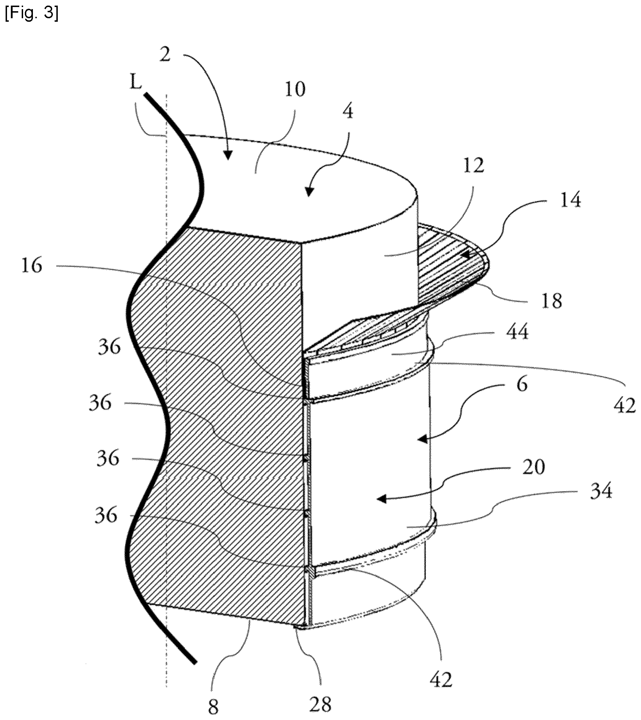

Tel que visible sur les figures 3 et 4, la paroi de butée 28 est plaquée contre la première face discoïde 8 lorsque l'élément de maintien 6 est monté sur le bloc de traitement 4. La dimension radiale de la paroi de butée 28 est déterminée pour pouvoir former une butée longitudinale suffisamment grande pour maintenir en position l'élément de maintien 6 par rapport au bloc de traitement 4 sans pour autant entraver la circulation de fluide d'un tronçon de garnissage à l'autre en périphérie du bloc de traitement 4.

La paroi de butée 28 s'étend à 90° avec la portion de maintien 20.

La paroi de butée 28 présente ici une surface interne en contact avec la première face discoïde 8 du bloc de traitement 4, et une surface externe 30 destinée à être en contact avec un séparateur ou un tronçon de garnissage voisin.

Tel que visible sur la figure 4, la paroi de butée 28 peut comporter au moins une entaille annulaire 32 disposée sur la surface externe 30 de la paroi de butée 28. Cette entaille annulaire 32 peut s'étendre sur tout le pourtour de la paroi de butée. On comprend que l'entaille annulaire 32 est plus particulièrement réalisée au plus proche de l'extrémité libre de la paroi de butée 28. L'entaille annulaire 32 forme une surface de décrochage permettant d'éviter que du fluide, par capillarité, vienne stagner sur la surface externe 30 de la paroi de butée.

La portion de maintien 20 comporte une paroi annulaire 34 entourant le bloc de traitement 4 et au moins une griffe annulaire 36 faisant saillie de la paroi annulaire 34 vers l'intérieur de la portion de maintien, et donc vers le bloc de traitement 4. Plus particulièrement, l'élément de maintien 6 comprend plusieurs griffes annulaires 36 faisant saillie de la paroi annulaire 34 réparties le long de la direction longitudinale L. La paroi annulaire 34 s'étend à distance du bloc de traitement et forme un corps principal de l'élément de maintien 6 reliant les différents composants de cet élément de maintien 6 parmi lesquels la paroi de chevauchement 44 précédemment évoquée, et les griffes annulaires 36 forment des organes coopérants avec le bloc de traitement 4 pour rendre solidaire ce dernier de l'élément de maintien 6. Les griffes annulaires 36 peuvent notamment prendre chacune la forme d'un crochet apte à agripper une ou plusieurs plaque(s) de traitement du bloc de traitement 4, en se plantant dans la matière des plaques de traitement, entre les bandes ondulées entrecroisées notamment pour ainsi maintenir la distance entre l'élément de maintien et le bloc de traitement 4.

Les griffes annulaires 36 peuvent être sensiblement similaires les unes aux autres, en s'étendant de façon circulaire sur tout le pourtour de la paroi annulaire 34 et elles peuvent être réparties de façon régulière le long de la paroi annulaire 34 selon la direction longitudinale L.

Une des griffes est disposée à la jonction de la paroi annulaire 34 et de la paroi de chevauchement 44, qui prolonge longitudinalement la paroi annulaire 34. Au niveau de cette jonction, une saillie est formée sur l'extérieur de la paroi annulaire 34 dans un plan perpendiculaire à la direction longitudinale L de sorte à former une nervure de rigidification 42 prenant ici la forme d'un anneau, comme notamment visible sur les figures 2 et 3.

Tel que cela a pu être évoqué, la paroi de chevauchement 44 présente sur sa face interne, en regard du bloc de traitement, lorsque l'élément de maintien 6 est monté sur le bloc de traitement 4, un logement pour une protubérance de la portion de liaison 16 de la pièce de renvoi de fluide 14. On comprend ici que la portion de liaison 16 s'étend au moins en partie dans le logement, ce qui contribue à figer la position de la pièce de renvoi de fluide 14 par rapport à l'élément de maintien 6 et au bloc de traitement 4.

L'élément de maintien 6 peut être formé en aluminium et la pièce de renvoi de fluide 14 peut-être formée en aluminium.

Tel qu'elle vient d'être décrite, la présente invention atteint bien le but qu'elle s'est fixée à savoir proposer un tronçon de garnissage 2 comportant un élément de maintien 6 configuré pour faciliter l'insertion du tronçon de garnissage 2 dans la virole 1 et pour optimiser la position centrée du tronçon de garnissage au sein de la virole.

La présente invention ne saurait toutefois se limiter aux moyens et configurations décrits et illustrés ici et elle s'étend également à tout moyen et configuration équivalents ainsi qu'à toute combinaison techniquement opérante de tels moyens.

## Revendications

1. Tronçon de garnissage (2) destiné à être installé dans une virole (1) pour former une colonne de séparation gaz/liquide, le tronçon de garnissage (2) comprenant un bloc de traitement (4) d'un fluide prenant globalement une forme cylindrique s'étendant le long d'une direction longitudinale (L), le bloc de traitement (4) étant formé par un empilement de plaques de traitement du fluide le long de la direction longitudinale (L), le bloc de traitement (4) présentant une première face discoïde (8) et une deuxième face discoïde (10) s'étendant chacune dans des plans parallèles l'un par rapport à l'autre, le bloc de traitement (4) présentant une face externe (12) s'étendant sur le pourtour dudit bloc de traitement (4) entre la première face discoïde (8) et la deuxième face discoïde (10), le tronçon de garnissage (2) comportant au moins un élément de maintien (6) du bloc de traitement (4) s'étendant au moins partiellement autour de la face externe (12) du bloc de traitement (4), l'élément de maintien (6) comportant une portion (20) de maintien en position des plaques de traitement du bloc de traitement (4) et une portion (22) disposée à une extrémité longitudinale de l'élément de maintien (6) et en contact avec la première face discoïde (8), **caractérisé en ce qu'**une pièce de renvoi de fluide (14) s'étend sur la périphérie du tronçon de garnissage (2), la pièce de renvoi de fluide (14) comportant une portion de liaison (16), sensiblement cylindrique et configurée pour être liée au bloc de traitement (4) et à l'élément de maintien (6), et une portion de guidage (18) du fluide prolongeant la portion de liaison (16) en formant un plan incliné s'éloignant de la face externe (12) du bloc de traitement (4) au fur et à mesure de l'éloignement de la portion de liaison (16), la pièce de renvoi de fluide (14) étant distincte de l'élément de maintien (6), la portion de liaison (16) étant interposée entre l'élément de maintien (6) et le bloc de traitement (4).

2. Tronçon de garnissage (2) selon la revendication précédente, dans lequel la pièce de renvoi de fluide (14) est moins rigide que l'élément de maintien (6).

3. Tronçon de garnissage (2) selon la revendication précédente, dans lequel la portion de liaison (16) de la pièce de renvoi de fluide (14) a une épaisseur qui est au plus la moitié, voire au plus le tiers de l'épaisseur de la portion de maintien de l'élément de maintien (6).

4. Tronçon de garnissage (2) selon l'une quelconque des revendications 1, 2 ou 3, dans lequel la pièce de renvoi de fluide (14) est disposée de telle sorte que la portion de liaison (16) est disposée entre le bloc (4) et la paroi de chevauchement (44).

5. Tronçon de garnissage (2) selon l'une quelconque des revendications 2 à 4, dans lequel la portion de guidage (18) est mobile entre une position de repos et une position de travail, la portion de guidage (18) étant libre durant la position de repos tandis que la portion de guidage (18) est au moins partiellement plaquée contre une face interne de la virole (1) dans la position de travail.

6. Tronçon de garnissage (2) selon l'une quelconque des revendications 2 à 5, dans lequel l'élément de maintien (6) est formé en aluminium et la pièce de renvoi de fluide (14) est formée en aluminium.

7. Tronçon de garnissage (2) selon l'une quelconque des revendications précédentes, dans lequel la paroi de butée (28) comporte au moins une entaille annulaire (32) disposée sur une surface externe (12) de la paroi de butée (28).

8. Tronçon de garnissage (2) selon l'une quelconque des revendications précédentes, dans lequel la portion de maintien (20) comporte une paroi annulaire (34) entourant le bloc de traitement (4) et au moins une griffe annulaire (36) faisant saillie de la paroi annulaire (34) vers le bloc de traitement (4) pour être en prise dans ledit bloc de traitement (4).

9. Tronçon de garnissage (2) selon la revendication précédente, dans lequel l'élément de maintien (6) comprend plusieurs griffes annulaires (36) faisant saillie de la paroi annulaire (34) en se répartissant le long de la direction longitudinale (L).

10. Tronçon de garnissage (2) selon la revendication précédente, dans lequel la paroi de chevauchement (44) forme un logement pour une protubérance de la portion de liaison (16) de la pièce de renvoi de fluide (14).

11. Colonne de traitement gaz/liquide comportant une virole (1) et au moins un tronçon de garnissage (2) selon l'une quelconque des revendications précédentes.

## Patentansprüche

1. Packungsabschnitt (2) zum Einbau in einen Mantel (1), um eine Gas/Flüssig-Trennkolonne zu bilden, wobei der Packungsabschnitt (2) einen Fluidbehandlungsblock (4) umfasst, der eine allgemein zylindrische Form aufweist, die sich entlang einer Längsrichtung (L) erstreckt, wobei der Behandlungsblock (4) durch einen Stapel von Fluidbehandlungsplatten entlang der Längsrichtung (L) des Mantels (1) gebildet ist, der Behandlungsblock (4) eine erste scheibenförmige Fläche (8) und eine zweite scheibenförmige Fläche (10) aufweist, die sich jeweils in zueinander parallelen Ebenen erstrecken, wobei der Behandlungsblock (4) eine Außenfläche (12) aufweist, die sich um den Umfang des Behandlungsblocks (4) zwischen der ersten scheibenförmigen Fläche (8) und der zweiten scheibenförmigen Fläche (10) erstreckt, wobei der Schrittmacherabschnitt (2) mit mindestens einem Halteelement (6) für den Behandlungsblock (4), das sich zumindest teilweise um die Außenfläche (12) des Behandlungsblocks (4) herum erstreckt, wobei das Halteelement (6) einen Abschnitt (20) zum Festhalten der Behandlungsplatten des Behandlungsblocks (4) und einen an einem Längsende des Halteelements (6) angeordneten und in Kontakt stehenden Abschnitt (22) aufweist mit der ersten scheibenförmigen Fläche (8), **dadurch gekennzeichnet, dass** sich ein Fluidumlenkungsteil (14) über den Umfang des Dichtungsabschnitts (2) erstreckt, wobei das Fluidumlenkungsteil (14) einen im Wesentlichen zylindrischen Verbindungsabschnitt (16), der so gestaltet ist, dass er mit dem Behandlungsblock (4) und dem Halteelement (6) verbunden werden kann, und einen Fluidumführungsabschnitt (18) umfasst, der sich von dem Verbindungsabschnitt (16) zu dem Halteelement (6) erstreckt, eine schiefe Ebene, die sich von der Außenfläche (12) des Behandlungsblocks (4) wegbewegt, wenn sich der Verbindungsabschnitt (16) wegbewegt, wobei das Fluidrückführteil (14) von dem Halteelement (6) getrennt ist, wobei der Verbindungsabschnitt (16) zwischen dem Halteelement (6) und dem Behandlungsblock (4) angeordnet ist.

2. Packungsabschnitt (2) nach dem vorhergehenden Anspruch, bei dem das Flüssigkeitsumlenkteil (14) weniger starr ist als das Rückhalteelement (6).

3. Packungsabschnitt (2) nach dem vorhergehenden Anspruch, bei dem der Verbindungsabschnitt (16) des Fluidrückführteils (14) eine Dicke aufweist, die höchstens die Hälfte oder höchstens ein Drittel der Dicke des Halteabschnitts des Halteelements (6) beträgt.

4. Packungsabschnitt (2) nach einem der Ansprüche 1, 2 oder 3, wobei das Fluidumlenkteil (14) so angeordnet ist, dass der Verbindungsabschnitt (16) zwischen dem Block (4) und der Überlappungswand (44) angeordnet ist.

5. Packungsabschnitt (2) nach einem der Ansprüche 2 bis 4, wobei der Führungsabschnitt (18) zwischen einer Ruheposition und einer Arbeitsposition beweglich ist, wobei der Führungsabschnitt (18) in der Ruheposition frei ist, während der Führungsabschnitt (18) in der Arbeitsposition zumindest teilweise gegen eine Innenfläche der Hülse (1) gedrückt wird..

6. Packungsabschnitt (2) nach einem der Ansprüche 2 bis 5, , bei dem das Rückhalteelement (6) aus Aluminium und das Flüssigkeitsrückführteil (14) aus Aluminium gebildet ist.

7. Packungsabschnitt (2) nach einem der vorhergehenden Ansprüche, wobei die Anschlagwand (28) mindestens eine ringförmige Kerbe (15) (32) aufweist, die an einer Außenfläche (12) der Anschlagwand (28) angeordnet ist.

8. Packungsabschnitt (2) nach einem der vorhergehenden Ansprüche, bei dem der Rückhalteteil (20) eine ringförmige Wandung aufweist
(34), die den Behandlungsblock (4) umgibt, und mindestens eine ringförmige Klaue (36), die von der ringförmigen Wand (34) in Richtung des Behandlungsblocks (4) vorsteht, um in den Behandlungsblock (4) einzugreifen.

9. Packungsabschnitt (2) nach dem vorhergehenden Anspruch, wobei das Rückhalteelement (6) eine Vielzahl von ringförmigen Klauen (36) aufweist, die von der ringförmigen Wand (34) abstehen und entlang der Längsrichtung (L) verteilt sind.

10. Packungsabschnitt (2) nach dem vorhergehenden Anspruch, bei dem die Überlappungswand (44) ein Gehäuse für eine Ausstülpung des Verbindungsabschnitts (16) des Fluidumlenkteils (14) bildet.

11. Gas-Flüssig-Behandlungskolonne mit einem Mantel (1) und mindestens einem Packungsabschnitt (2) nach einem der vorhergehenden Ansprüche.

## Claims

1. A packing section (2) for installation in a shell (1) to form a gas/liquid separation column, the packing section (2) comprising a fluid treatment block (4) having a generally cylindrical shape extending along a longitudinal direction (L), the treatment block (4) being formed by a stack of fluid treatment plates along the longitudinal direction (L) of the shell (1), the treatment block (4) having a first discoidal face (8) and a second discoidal face (10) each extending in planes parallel to one another, the treatment block (4) having an outer face (12) extending around the periphery of said treatment block (4) between the first discoidal face (8) and the second discoidal face (10), the pacing section (2) comprising at least one holding element (6) for the treatment block (4) extending at least partially around the outer face (12) of the treatment block (4), the holding element (6) comprising a portion (20) for holding the treatment plates of the treatment block (4) in position and a portion (22) disposed at a longitudinal end of the holding element (6) and in contact with the first discoid face (8), **characterised in that** a fluid deflection part (14) extends over the periphery of the packing section (2), the fluid deflection part (14) comprising a substantially cylindrical connecting portion (16) configured to be connected to the treatment block (4) and to the holding element (6), and a fluid guide portion (18) extending from the connecting portion (16) to the holding element (6), forming an inclined plane moving away from the outer face (12) of the treatment block (4) as the connecting portion (16) moves away, the fluid return part (14) being separate from the holding element (6), the connecting portion (16) being interposed between the holding element (6) and the treatment block (4).

2. Packing section (2) according to the preceding claim, in which the 30 fluid deflection part (14) is less rigid than the retaining element (6).

3. Packing section (2) according to the preceding claim, in which the connecting portion (16) of the fluid return part (14) has a thickness which is at most half, or at most one third, of the thickness of the holding portion of the holding element (6).

4. Packing section (2) according to any one of claims 1, 2 or 3, wherein the fluid deflection part (14) is arranged such that the connecting portion (16) is arranged between the block (4) and the overlap wall (44).

5. Packing section (2) according to any one of claims 2 to 4, wherein the guide portion (18) is movable between a rest position and a working position, the guide portion (18) being free during the rest position while the guide portion (18) is at least partially pressed against an inner face of the ferrule (1) in the working position.

6. Packing section (2) according to any one of claims 2 to 5, in which the retaining element (6) is formed from aluminium and the fluid return part (14) is formed from aluminium.

7. Packing section (2) according to any one of the preceding claims, wherein the abutment wall (28) comprises at least one annular notch (15) (32) disposed on an outer surface (12) of the abutment wall (28).

8. Packing section (2) according to any one of the preceding claims, in which the retaining portion (20) comprises an annular wall (34) surrounding the treatment block (4) and at least one annular claw (36) projecting from the annular wall (34) towards the treatment block (4) to engage in said treatment block (4).

9. Packing section (2) according to the preceding claim, wherein the retaining element (6) comprises a plurality of annular claws (36) projecting from the annular wall (34) and distributed along the longitudinal direction (L).

10. Packing section (2) according to the preceding claim, in which the overlap wall (44) forms a housing for a protuberance of the connecting portion (16) of the fluid deflection part (14).

11. Gas/liquid treatment column comprising a shell (1) and at least one section of packing (2) according to any one of the preceding claims.
